Europäisches Patentamt

European Patent Office

Office européen des brevets

(19)

(11) Numéro de publication: **0 155 886**

**A1**

(12) **DEMANDE DE BREVET EUROPEEN**

(21) Numéro de dépôt: 85400415.7

(22) Date de dépôt: 05.03.85

(51) Int. Cl.⁴: **F 25 D 3/12**
A 23 L 3/36, A 23 G 9/12

(30) Priorité: 05.03.84 FR 8403375

(43) Date de publication de la demande:
25.09.85 Bulletin 85/39

(84) Etats contractants désignés:
AT BE CH DE FR GB IT LI LU NL SE

(71) Demandeur: L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07(FR)

(72) Inventeur: Gibot, Claude
5-7 rue Gambetta
F-92240 Malakoff(FR)

(74) Mandataire: Jacobson, Claude et al,
L'AIR LIQUIDE, SOCIETE ANONYME POUR L'ETUDE ET
L'EXPLOITATION DES PROCEDES GEORGES CLAUDE
75, quai d'Orsay
F-75321 Paris Cedex 07(FR)

(54) Procédé et installation de refroidissement d'un produit visqueux notamment alimentaire.

(57) L'invention concerne le refroidissement de produit visqueux.

Le produit placé dans un bac (30) est refroidi par un pot rotatif (8) dans lequel est généré, par des tromblons (20) et un dépôt de neige carbonique (40).

Application au refroidissement de produits alimentaires tels soupes, potages, sauces, crèmes, pâtes, gelées, etc...

EP 0 155 886 A1

"PROCEDE ET INSTALLATION DE REFROIDISSEMENT D'UN PRODUIT VISQUEUX NOTAMMENT ALIMENTAIRE"

La présente invention concerne le refroidissement d'un produit visqueux notamment alimentaire du genre mettant en oeuvre un échange thermique entre un milieu cryogénique et une masse dudit produit.

Dans l'industrie alimentaire et dans la restauration collective, le refroidissement rapide de certains produits alimentaires constitue une nécessité absolue. Actuellement, en pratique, le refroidissement se fait par un simple passage en chambre froide dont la durée est de l'ordre de 24 à 48 heures, ce qui constitue un inconvénient important.

L'objet de l'invention est d'assurer un refroidissement de produit visqueux, notamment alimentaire, qui permette de traiter des charges importants, par exemple de 30 à 100 litres, avec des durées de traitement relativement brèves, de l'ordre de 2 heures maximum, pour assurer une réduction de température à + 10°C, tout en permettant de réaliser de façon simple et rapide les opérations de nettoyage subséquentes.

On a bien proposé d'assurer un refroidissement rapide par un serpentin échangeur alimenté par un fluide réfrigérant qui plonge dans la masse du produit, mais il s'est avéré que cette façon de faire ne convenait pas pour les produits à viscosité élevée, car il se formait immédiatement, au niveau du serpentin échangeur, un croûtage qui bloque le transfert thermique et peut conduire à une détérioration du produit.

En outre, le nettoyage d'un tel serpentin est réellement peu pratique.

Il est connu par exemple du brevet français 934.223 de réaliser à l'aide d'une sorbetière des produits glacés sous forme solide. Dans ce type de sorbetière, on utilise un bac dans lequel se trouve de la glace que l'on plonge dans le produit à glacer et l'on fait tourner ce bac muni d'ailettes de manières à améliorer l'échange thermique entre la glace et le produit qui se solidifie peu à peu. Dans un tel procédé, le but poursuivi est de solidifier rapidement le produit. Il convient donc d'appliquer la plus grande quantité possible de froid au produit à glacer et ceci dans les plus brefs délais.

Des procédés et dispositifs analogues sont décrits par exemple dans le brevet belge 385.377 et le brevet français 2.194.924. Dans ces brevets, on fait appel au gaz carbonique sous forme liquide comme produit réfrigérant, la sublimation de la neige carbonique s'effectuant à une température suffisamment basse par rapport à la température de congélation du produit pour assurer cette opération de manière relativement rapide.

Le problème posé par l'invention est différent du problème de la congélation d'un produit alimentaire. Dans l'industrie de préparation de produits alimentaires destinés à être ultérieurement emballés pour assurer leur conservation, se sont particulièrement développés, récemment, les produits du type plats cuisinés ou analogues. Ces produits font généralement appel à des sauces, par exemple des sauces homogènes du type Béchamel, dont il convient d'éviter de détruire l'homogénéité au cours du procédé de conservation ou des produits en sauce du type "coquille Saint-Jacques", "bouchée à la reine", etc ... dans lesquels la difficulté résulte du fait qu'il est impératif de ne pas détériorer les morceaux parfois fragiles présents dans cette sauce.

Pour des contraintes d'hygiène alimentaire, le fabriquant de la sauce ou de produits analogues dispose généralement d'environ 1 heure 30 minutes pour refroidir son produit de sa température de cuisson, de l'ordre de 90°C, à sa température de conservation d'environ 10°C, cette température devant ensuite être maintenue jusqu'à l'emballage du produit, l'ensemble des deux opérations ne devant pas excéder deux heures.

Le problème qui se pose est donc de refroidir à la fois rapidement de grandes quantités de produits du type sauce (par exemple de l'ordre de 100 litres) tout en évitant l'apparition d'une croûte solide dans cette sauce, croûte qui résulterait d'un refroidissement trop rapide et donc d'une congélation partielle de cette sauce.

Les différentes techniques décrites ci-dessus ne permettent pas, à l'heure actuelle, de résoudre ce problème.

Selon le procédé de refroidissement conforme à l'invention, dans un procédé de refroidissement d'un produit visqueux, notamment alimentaire, du genre mettant en oeuvre un échange thermique entre un milieu crogénique et une masse dudit produit, l'échange thermique est assuré par une paroi métallique en forme de pot plongeant dans la masse du produit et à l'intérieur duquel est généré un dépôt de neige carbonique constituant ledit milieu cryogénique, tandis que le produit en masse est maintenu à l'état agité.

De la sorte, et en effectuant des phases successives de génération de neige carbonique suivies de phases d'arrêt de la dite génération de neige carbonique, alors que l'agitation du produit en masse est maintenue en permanence, il est tout-à-fait possible d'assurer un transfert thermique important sans que le phénomène de croûtage ne se produise, alors que le nettoyage final d'un tel moyen de transfert thermique est particulièrement simple à effectuer.

Pour cela, on a constaté que l'absence de croûtage au niveau de la paroi d'échange thermique entre la neige carbonique et le produit à refroidir n'était possible que si l'on réalisait le refroidissement de celui-ci par paliers successifs de descente en température. Pour cela, on alterne les phases successives de refroidissement des parois du pot plongeant (injection de neige carbonique) et les phases de reprise en température de ces parois au cours desquelles lesdites parois prennent à nouveau la température du produit à refroidir, après sublimation complète de la neige carbonique, le produit étant constamment maintenu en état d'agitation, compatible avec la composition.

L'invention comprend également une installation de refroidissement d'un produit visqueux, notamment alimentaire, caractérisée en ce qu'elle comporte, dans une enceinte thermiquement isolée, des moyens de réception d'un bac pour produit de traitement, des moyens de mise en place et de relevage d'un pot échangeur dans le, et hors, dudit bac respectivement, le dit pot étant associé à au moins un générateur de neige carbonique.

On notera que l'invention, qui combine à la fois un milieu de transfert thermique sous forme de neige carbonique à une température de l'ordre de -79°C avec un organe d'échangeur thermique en forme de pot cylindrique, permet le transfert d'un flux frigorifique important, grâce à l'agitation permanente du produit à traiter qui assure une homogénéisation de la température dans la masse du produit.

En outre, les gaz froids issus de la sublimation de la neige carbonique favorisent la réduction de température par échange thermique

4

avec l'extérieur du bac de traitement avant d'être évacués par une cheminée vers l'extérieur.

La vitesse de rotation du pot dans le produit à refroidir dépend bien entendu de la viscosité de ce produit. Si la viscosité est faible (par exemple potage, sauce tomate, etc...), la vitesse de rotation peut être augmentée sans risque pour la qualité du produit. Bien entendu, plus la vitesse de rotation est élevée, plus le refroidissement du produit est rapide.

Inversement pour une viscosité assez importante du produit (par exemple sauce "Béchamel", sauce type "bouchée à la reine") la vitesse de rotation du pot plongeant doit être modérée afin d'éviter une aliénation des qualités du produit (séparation des ingrédients de la sauce Béchamel ou rupture des morceaux de la sauce type "bouchée à la reine").

Pour obtenir un refroidissement dans de bonnes conditions, on a constaté que la vitesse de rotation du pot dans le produit devait être telle que, compte tenu de la masse de neige carbonique présente dans le pot, celle-ci remonte le long des parois du pot, de préférence jusqu'au niveau du produit à refroidir dans son récipient. Vue en coupe, la surface de la neige carbonique est sensiblement parabolique. De la sorte, on augmente au maximum la surface d'échange thermique entre la neige carbonique et le produit à refroidir, sachant que par ailleurs la neige carbonique une fois sublimée vient refroidir, avant d'être évacuée, le produit dans sa partie périphérique externe.

Afin d'améliorer le refroidissement homogène du produit, le pot plongeur comporte sur sa paroi inférieure des pales en formes d'aube permettant, lors de la mise en rotation du pot, de chasser le produit à refroidir vers l'extérieur du bac de traitement et produire ainsi un courant dans le produit à refroidir de bas en haut. Afin d'améliorer encore le refroidissement, il est prévu de préférence sur les parois du récipient contenant le produit à refroidir des pales "anti-vortex", dont la fonction est de briser le vortex de produit à refroidir qui se forme dans le récipient de refroidissement et renvoyer ainsi le produit à refroidir de l'extérieur du bac vers l'intérieur de celui-ci, au contact du pot plongeant. De préférence, on disposera, dans un bac de forme

tronconique ou cylindrique, trois pales anti-vortex orientables espacées de 120° les unes des autres.

Selon un mode préférentiel de réalisation, ces pales seront orientables de manière à permettre une variation dans l'efficacité de la rupture du vortex. En effet, dans le cas de produits peu fragiles du type sauce tomate, portage, etc..., on a constaté que l'on pouvait orienter ces pales sensiblement radialement, ce qui crée une circulation plus intense du produit, donc un refroidissement plus rapide de celui-ci.

Inversement, dans le cas produits fragiles du type sauce "Béchamel" ou sauce comportant des morceaux, l'orientation des pales radialement entraîne la destruction partielle ou totale de ces morceaux. Dans ces conditions, on constate généralement qu'une orientation des pales à environ 45° par rapport à la position radiale dans le sens de rotation du produit dans son récipient, donne de bons résultats, permet d'améliorer la rapidité du refroidissement sans altérer sensiblement la qualité du produit.

On a constaté également que le dosage des frigories pour refroidir le produit sans croûtage devait être fait de manière à descendre en température par paliers successifs. En pratique, on constate que si l'on injecte de la neige carbonique dans le pot pendant une durée T, on obtient d'excellents résultats au point de vue rapidité de refroidissement et absence de croûtage en cessant cette injection pendant une durée de l'ordre de 2 à 3 T.

De manière générale, on sait que pour une même durée de mise en contact d'une même quantité de neige carbonique avec le produit à refroidir, l'abaissement de température de celui-ci sera d'autant plus faible que sa température est basse.

Dans ces conditions, l'homme de métier, pour fixer les phases successives d'injection de neige carbonique et d'arrêt d'injection de neige carbonique, expérimentera les durées relatives nécessaires pour éviter le croûtage du produit, lorsque ce produit est aux environs de la température finale de refroidissement. Pour simplifier l'appareil de mise en oeuvre, il fixera alors des durées constantes des phases successives à partir de ces conditions de fin de traitement. Bien entendu, ceci rallongera légèrement le procédé puisqu'il aurait été possible de refroidir le produit beaucoup plus rapidement au départ sans croûtage, mais inversement, ceci simplifie considérablement sa mise en oeuvre.

Bien entendu, il est tout à fait possible par de simples expériences de routine de déterminer pour un produit précis la durée relative des phases d'injection et de non injection de gaz carbonique dans la fourchette indiquée ci-dessus en fonction de la durée du traitement ou de la température du produit en cours de refroidissement et de faire varier ces durées par une commande électronique programmée, de manière connue en soi.

Pour un produit quel qu'il soit, on constate en pratique qu'une quantité de l'ordre de 0,7 à 0,8 kg de $CO_2$ liquide par kg de produit visqueux à refroidir est nécessaire, pour l'ensemble de la durée du traitement de refroidissement.

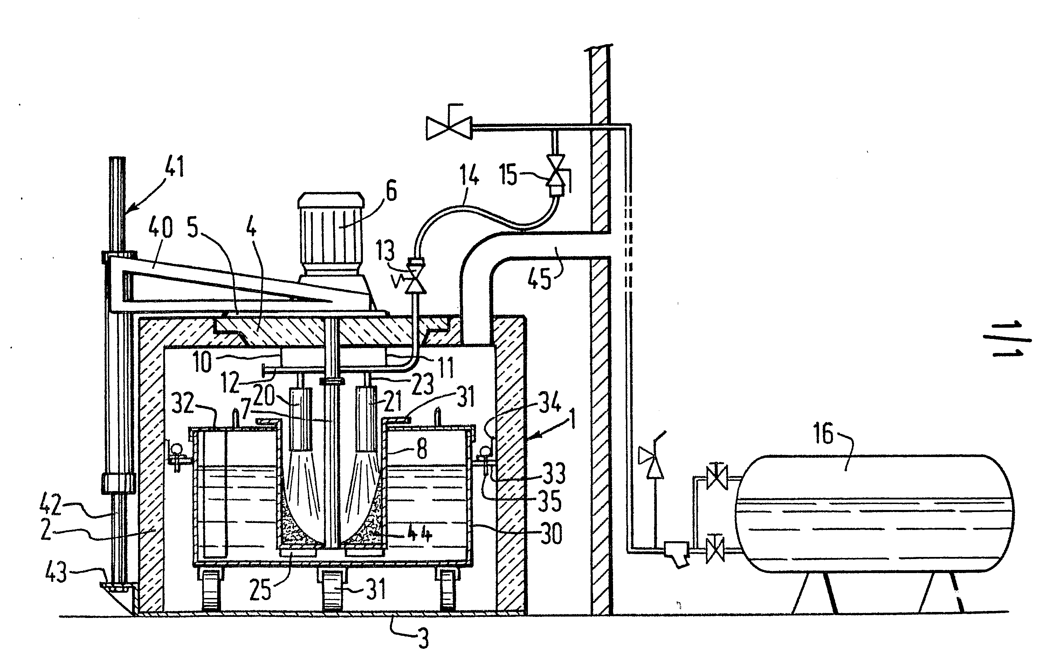

Les caractéristiques et avantages de l'invention ressortiront d'ailleurs de la description qui suit en référence au dessin annexé qui représente une coupe verticale d'une installation selon l'invention.

En se référant au dessin annexé, une installation de refroidissement selon l'invention comporte une enceinte d'isolation thermique 1 avec une paroi verticale cyclindrique 2, un fond métallique 3 et un couvercle amovible 4. Le couvercle 4 est monté sur une plaque-support 5 sur laquelle est montée un ensemble moteur-réducteur 6 dont un arbre de sortie 7 s'étend jusqu'au fond d'un pot échangeur en acier inoxydable 8, auquel il est solidarisé. De même, le couvercle 4 supporte, par des tirants 10 et 11, une rampe distributrice de gaz carbonique liquide 12 raccordée par une électrovanne 13 à une canalisation flexible d'alimentation 14, elle-même raccordée par une vanne d'arrêt 15 à une source de gaz carbonique liquide 16 maintenue à -20°C sous 20 bars. La rampe de gaz carbonique 12 alimente 2 générateurs de neige carbonique 20 et 21 en forme de tromblons cylindriques équipés chacun de façon connue d'une buse à ajutages de détente, dans laquelle débouche des dérivations de gaz carbonique liquide 23. Le pot d'échange thermique est également équipé, à sa paroi inférieure, de pales radiales d'agitation 25.

Le pot d'échange thermique 8 plonge pratiquement jusqu'au fond d'un bac de traitement 30 de forme cylindrique porté par trois roues 31 et présentant un couvercle 32 axialement ajouré pour permettre le passage à jeu faible du pot de traitement thermique 8 qui présente une collerette supérieure d'étanchéité 31. Le bac de traitement 30 présente des poignées latérales 33 qui sont adaptées à venir en regard de plots de fixation 34 solidaires de l'enceinte 2, la solidarisation étant effectuée au moyen d'une goupille 35.

L'ensemble amovible constitué par le couvercle 4, le moteur 6 avec l'arbre 7, la rampe distributrice 12, les deux générateurs de neige carbonique 20 et 21 et le pot échangeur 8 sont montés sur un bras 40 d'une potence 41 dont la colonne forme la partie mobile d'un verin 42 dont la tête est montée de façon fixe sur un rebord d'appui 43 du fond d'enceinte 3.

L'installation fonctionne de la façon suivante : au départ, le verin 42 est en position allongé de façon à assurer par relevage de l'équipage mobile constitué par le moteur 6, le pot 8 et les générateurs 20, le libre accès vers l'intérieur de l'enceinte pour l'admission, par une porte latérale non représentée du bac de traitement 30 monté sur roues. Une fois ce bac de traitement amené en position où il est verrouillé par les poignées 33 et les goupilles 34, l'équipage mobile décrit plus haut est abaissé, ce qui fait plonger le pot échangeur 8 jusqu'à atteindre presque le fond du bac de traitement 8 simultanément avec la venue en position de fermeture du couvercle 4. Après quoi, la vanne 15 d'arrêt étant ouverte, l'électrovanne 13 est successivement ouverte pendante un bref laps de temps puis fermée pendant un laps de temps plus long.

La détente du gaz carbonique sous pression de 20 bars à - 20°C à la sortie des tromblons 20 et 21 génère un débit de neige carbonique qui vient se plaquer contre le fond et la paroi latérale du pot échangeur 8, formant un dépôt tel que représenté en 44. Ce dépôt 44 se sublime pendant la phase d'arrêt d'alimentation en liquide carbonique en transférant ses frigories essentiellement au travers de la paroi du pot 8 et accessoirement par les vapeurs de gaz carbonique s'échappant dans l'enceinte 1 autour du bac 30, qu'elles refroidissent avant de s'échapper par la cheminée 45. La température de produit s'abaisse ainsi progressivement, la paroi du pot 8 remontant à chaque fin de sublimation du dépôt de neige carbonique à la température du produit en cours de refroidissement.

A titre d'exemple, on a traité des sauces dans les conditions suivantes :

Exemple 1 :

| | |
|---|---|
| Sauce "Béchamel" | : 80 litres |
| Composition Béchamel en poids | : 6,43 % margarine |
| | : 6,43 % farine |
| | : 12,05 % fromage râpé |
| Complément | : lait |
| Température avant traitement | : + 66°C |
| Température après traitement | : + 8°C |
| Durée de traitement | : 1h15mn |
| Consommation de $CO_2$ | : 0,8 kg/kg de sauce |
| Vitesse de rotation | : 200T/mn |

Temps de nettoyage après traitement pour obtenir un matériel prêt à une nouvelle mise en oeuvre     : 8 à 10 mn.

Exemple 2 :

Sauce tomate :

On réalise un refroidissement en 30 minutes de 90°C à 10°C avec une mise en rotation à 200 tours par minute et des phases d'injection de neige carbonique de 30 secondes suivies par des phases de pause (ou non injection de gaz carbonique) de 1 minute 30 secondes, toutes choses égales par ailleurs à l'exemple précédent.

Exemple 3 :

Sauce pizza :

Sauce champignon à la Grecque :

Sauce à coquilles Saint-Jacques :

Pour ces trois sauces qui contiennent des morceaux relativement fragiles, on constate qu'en appliquant les mêmes conditions de traitement que pour la sauce Béchamel ci-dessus, le refroidissement s'effectue sensiblement dans le même temps sans aliénation des produits solides. Bien entendu, les pales anti-vortex étaient pour ces exemples, comme dans le cas de la sauce Béchamel, orientées à 45°. (orientation à 90° dans le cas de la sauce tomate).

0155886

Les domaines d'application envisagés sont le refroidissement de soupes, potages, sauces, crèmes, pâtes, produits de garnissage type gelée... notamment en collectivités et industrie.

0155886

## REVENDICATIONS

1. Procédé de refroidissement d'un produit visqueux, notamment alimentaire, du genre mettant en oeuvre un échange thermique entre un milieu cryogénique et une masse dudit produit, caractérisé en ce que l'échange thermique est assuré par une paroi métallique en forme de pot plongeant dans la masse du produit et à l'intérieur duquel est généré un dépôt de neige carbonique constituant ledit milieu cryogénique, tandis que le produit en masse est maintenu à l'état agité.

2. Procédé selon la revendication 2 caractérisé en ce que le pot est lui-même mise en rotation pour créer l'état agité de la masse de produit.

3. Procédé selon les revendications 1 ou 2 caractérisé en ce que l'on effectue des phases successives de génération de neige carbonique suivies de phases d'arrêt de la dite génération de neige carbonique, alors que l'agitation du produit en masse est maintenue en permanence.

4. Procédé selon la revendication 3 caractérisé en ce que l'arrêt de la génération de neige carbonique se poursuit jusqu'à sublimation complète du dépôt de neige carbonique.

5. Installation de refroidissement d'un produit visqueux, notamment alimentaire, caractérisée en ce qu'elle comporte, dans une enceinte thermiquement isolée, des moyens de réception d'un bac pour produit de traitement, des moyens de mise en place et de relevage d'un pot échangeur dans le et hors dudit bac respectivement, le dit pot étant associé à au moins un générateur de neige carbonique.

6. Installation selon la revendication 5, caractérisée en ce que le pot échangeur est monté en bout d'un arbre rotatif entrainé par un moteur disposé à l'extérieur de l'enceinte.

7. Installation de refroidissement selon la revendication 6, caractérisée en ce que le pot échangeur est équipé de pales agitatrices.

8. Installation selon les revendications 5 à 7, caractérisée en ce que le bac de traitement est recouvert d'un couvercle annulaire entourant le pot échangeur, le dit couvercle étant équipé de pales verticales.

0155886

9. Installation selon les revendications 1 à 8, caractérisée en ce que l'ensemble amovible est supporté par un bras de potence monté sur une colonne à verin.

1/1

0155886

Office européen
des brevets

**RAPPORT DE RECHERCHE EUROPEENNE**

**0155886**
Numéro de la demande

EP  85 40 0415

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | FR-A- 934 223 (SAVARY) <br> * Page 2, lignes 15-35; figures 6,7,8 * | 1,2 | F 25 D 3/12 <br> A 23 L 3/36 <br> A 23 G 9/12 |
| D,A | | 5,6,7 | |
| | --- | | |
| D,Y | BE-A- 385 377 (FRIGATOR A.G.) <br> * En entier * | 5,6 | |
| D,A | | 1 | |
| | --- | | |
| Y | BE-A- 451 307 (LEJEUNE) <br> * Résumé; figures 1,2 * | 5,6 | |
| A | | 9 | DOMAINES TECHNIQUES RECHERCHES (Int. Cl.4) |
| | --- | | |
| A | BE-A- 395 194 (LAMBRECHTS) <br> * Pages 2,3; figure 1 * | 1,5 | F 25 D <br> A 23 L <br> A 23 G |
| | --- | | |
| D,A | FR-A-2 194 924 (DEBARE) <br> * Pages 1,2; figures * | 3,4 | |
| | --- | | |
| A | FR-A-2 446 606 (CESBRON et al.) | | |
| | --- | | |
| A | DE-A-2 916 310 (THIMM-DORNER) | | |
| | ---     -/- | | |

Le présent rapport de recherche a été établi pour toutes les revendications

| Lieu de la recherche <br> LA HAYE | Date d'achèvement de la recherche <br> 03-06-1985 | Examinateur <br> SILVIS H. |
|---|---|---|

**0155886**
Numéro de la demande

**Office européen des brevets**

# RAPPORT DE RECHERCHE EUROPEENNE

EP 85 40 0415

| DOCUMENTS CONSIDERES COMME PERTINENTS | | | Page 2 |
|---|---|---|---|
| **Catégorie** | **Citation du document avec indication, en cas de besoin, des parties pertinentes** | **Revendication concernée** | **CLASSEMENT DE LA DEMANDE (Int. Cl.4)** |
| A | DE-C- 844 748 (HANFFSTENGEL) | | |

**DOMAINES TECHNIQUES RECHERCHES (Int. Cl.4)**

Le présent rapport de recherche a été établi pour toutes les revendications

| Lieu de la recherche | Date d'achèvement de la recherche | Examinateur |
|---|---|---|
| LA HAYE | 03-06-1985 | SILVIS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO Form 1503 03.82